# EUROPÄISCHE PATENTSCHRIFT

(11) **EP 1 300 355 B1**
(45) Veröffentlichungstag und Bekanntmachung des Hinweises auf die Patenterteilung: **28.06.2006**
(21) Anmeldenummer: 02020624.9
(22) Anmeldetag: 13.09.2002
(51) Int. Cl.: B65H 37/00, B29B 13/04, B29L 9/00

(54) **Verfahren und Vorrichtung zur Verarbeitung von Mehrschichtkunststoffen**
Method and apparatus for processing multilayered polymeric films
Procédé et appareil de traitement de films polymères multicouches

(30) Priorität: 06.10.2001 DE 10149371
(43) Veröffentlichungstag der Anmeldung: 09.04.2003
(73) Patentinhaber: LINDAUER DORNIER GESELLSCHAFT M.B.H, 88129 Lindau (DE)
(72) Erfinder: Rutz, Andreas, Dr., 88131 Lindau (DE); Müller, Adolf, 88147 Achberg (DE)

(56) Entgegenhaltungen:
- DE-A- 1 619 291
- DE-B- 2 833 189

## Beschreibung

Die Erfindung betrifft ein Verfahren und eine Vorrichtung zur Verarbeitung von Mehrschicht-Kunststofffolien mit bei niedrigen Temperaturen siegelfähigen Schichten, nach dem Oberbegriff der unabhängigen Patentansprüche.

In vielen Bereichen der Folienanwendung kommt es auf gute Laufeigenschaften und hohe Verarbeitungsgeschwindigkeiten an. Ein wesentlicher Faktor in der Verarbeitung ist die Siegelfähigkeit der Mehrschicht-Folien.
In Verpackungsmaschinen werden die Folien um das zu verpackende Gut gelegt und müssen an den überlappenden Bereichen miteinander verklebt werden. Dieses Verkleben erfolgt durch eine im allgemeinen durch Co-Extrusion auf die Grundfolie aufgebrachte siegelfähige Schicht, die dazu durch äußere Wärmeeinbringung aufgewärmt werden muss. Bei Erreichen der erforderlichen Siegeltemperatur kommt es zum Verkleben der Folienlagen.
Es ist bekannt, dass Polymerfolien schlechte Wärmeleiter sind. Für das Erwärmen dieser Folien ist bis zum Erreichen einer vorgegebenen Siegeltemperatur eine gewisse Zeit erforderlich. Diese Zeit beansprucht einen wesentlichen Anteil bei den für die Verpackung insgesamt erforderlichen Zeiten und bestimmt damit ganz wesentlich die erreichbaren Verarbeitungsgeschwindigkeiten.
Durch Absenken der die Siegelfähigkeit initiierenden Temperaturen und durch eine Modifikation der co-extrudierten Schichten kann der Zeitanteil des Siegelvorgangs an der gesamten Verarbeitungszeit verringert werden. Damit steigen die möglichen Verarbeitungsgeschwindigkeiten. Zur Herstellung solcher siegelfähiger Folien sind verschiedene Aufheiz- und Abkühlvorgänge erforderlich. Dies erfolgt entweder durch Kontaktheizung bzw. -kühlung auf Walzen oder durch Beblasung mit entsprechend temperierter Luft. Zusätzlich müssen die Folien durch die Verarbeitungsmaschine geführt werden. Dies erfolgt zumeist durch Führungs- und Umlenkwalzen.
Typische Verarbeitungstemperaturen liegen dabei zwischen 80 °C und 220 °C. Siegelfähige Schichten werden typischerweise bei Temperaturen von derzeit 100 - 140 °C aktiviert. Die Tendenz geht jedoch hin zu immer niedrigeren Temperaturen. So werden derzeit Polymere für die Siegelschichten erprobt mit Siegeltemperaturen von 70 - 80 °C
Die großen Temperaturunterschiede zwischen Verarbeitungstemperaturen und Siegeltemperaturen führen in den Verarbeitungsmaschinen - speziell bei Heiz- und Umlenkwalzen - zu Problemen. Es kommt bei Walzen mit Oberflächentemperaturen, die über der Siegeltemperatur liegen, zum Verkleben und damit zum Zerstören der siegelfähigen Schicht. Darüber hinaus kann dies zu Betriebsstörungen führen, die einen Stillstand der Anlage erfordern.

Eine Aufheizung der Folie sowie der siegelfähigen Schicht über die Siegeltemperatur hinaus ist durch kontaktfreie Erwärmung möglich. Eine Umlenkung der Folie mittels Walzen, die mit der heißen, siegelfähigen Schicht in Berührung kommen, ist kritisch, auch wenn die Umlenkwalze gekühlt wird, da beim ersten Auflaufen der Folie auf die Umlenkwalze die die Umlenkwalze berührende Schicht noch eine zu hohe Temperatur hat.

Aus der DE 2833189 B1 ist ein Verfahren und eine Vorrichtung zu dessen Durchführung bekannt, in dem eine Mehrschichtfolie vor der Behandlung in einer Reckwalzenanordnung auf eine Temperatur oberhalb der Reck- bzw. Verarbeitungstemperatur beheizt wird. Mit dem Abkühlen einer niedriger schmelzenden Schicht der Folie auf eine Temperatur unter die Recktemperatur und unter eine noch tiefere Klebetemperatur kühlt eine höher schmelzende Schicht auf die Recktemperatur ab. Um über den gesamten Reckbereich geeignete Temperaturen in den einzelnen Schichten zu erreichen und zu halten, ist davor ein Überheizen der Folie notwendig. Dies bedeutet einen erhöhten Energieverbrauch und die Gefahr der Beeinträchtigung der Materialeigenschaften in den einzelnen Folienschichten.

Aufgabe der Erfindung ist es, ein Verfahren und eine Vorrichtung zum Verarbeiten von Mehrschicht-Kunststofffolien mit siegelfähiger Außenschicht anzugeben, wonach auch bei siegelfähig beschichteten Folien mit sehr niedriger Siegeltemperatur Umlenkwalzen eingesetzt werden können, ohne dass es zu einer Beeinträchtigung der siegelfähigen Beschichtung oder einer Beschädigung der Walzen kommt.

Die Lösung dieser Aufgabe erfolgt erfindungsgemäß durch die in den unabhängigen Patentansprüchen angegebenen Merkmale.

Erfindungsgemäß wird vorgeschlagen, vor dem eigentlichen Kontakt der Mehrschicht-Kunststofffolie mit einer Umlenkwalze dieser eine Kühleinrichtung vorzuschalten, die die kritische äußere Siegelschicht auf ein unkritisches Temperaturniveau abkühlt. Gleichzeitig wird der der siegelfähigen Schicht gegenüberliegenden Schicht der Kunststofffolie Wärme zugeführt, wodurch das Niveau der Verarbeitungstemperatur vor dem Erreichen der Umlenkwalze und/oder während des Berührungskontaktes mit der Umlenkwalze weitgehend aufrecht erhalten wird.

Dazu wird auf der Seite der Warenlaufbahn, die die siegelfähige Schicht trägt, vor Auflaufen auf eine Umlenkwalze eine hochwirksame kurze Kühleinrichtung und auf der gegenüberliegenden Seite der Warenbahn eine Heizeinrichtung angeordnet.

In einer bevorzugten Ausgestaltung der Erfindung besteht die Kühleinrichtung aus einem Satz von Düsen, mit deren Hilfe gekühlte Luft mit hoher Geschwindigkeit auf die siegelfähige Schicht geblasen wird. Damit wird erreicht, dass die Außenschicht so weit abkühlt, dass es beim Auflaufen auf die, gegebenenfalls auch gekühlte, Umlenkwalze nicht zu den oben genannten Problemen kommt.

Wichtig ist, dass durch die Kühleinrichtung das Temperaturniveau der gesamten Folie nicht zu sehr abgesenkt wird, sondern im wesentlichen nur die äußere kritische Schicht betroffen ist. Gestaltet man die Kühleinrichtung so, dass ein hoher Wärmeübergang auf möglichst kurzer Strecke erreicht wird, verhindert die relativ schlechte Wärmeleitfähigkeit der Polymere ein zu starkes Vordringen der Abkühlung innerhalb der Folienschichten. Andererseits erreicht man durch den hohen Wärmeübergang eine ausreichendes Abkühlen der siegelfähigen Schicht vor Auflaufen auf die Umlenk- oder Führungswalzen.

Nachfolgend wird ein bevorzugtes Ausführungsbeispiel der Erfindung mit Bezug auf die Zeichnungsfiguren beschrieben. Aus den Zeichnungen und ihrer Beschreibung ergeben sich weitere Merkmale, Vorteile und Anwendungen der Erfindung.

Es zeigt:
- Figur 1:: einen schematischen Ausschnitt aus einer Folienverarbeitungsanlage mit Kühleinrichtung;
- Figur 2:: den Ausschnitt gemäß Figur 1 mit einer Darstellung verschiedener Verarbeitungszeitpunkte;
- Figur 3:: einen schematischen Querschnitt durch eine Mehrschicht-Kunststofffolie mit Unterteilung in verschiedene Schichten A-L;
- Figur 4:: eine Darstellung eines berechneten Temperaturverlaufs in den einzelnen Schichten A-L über der Zeit bei stark gekühlter Umlenkwalze;
- Figur 5:: eine Darstellung der berechneten Temperatur in den einzelnen Schichten A-L zu bestimmten Zeitpunkten bei stark gekühlter Umlenkwalze;
- Figur 6:: eine Darstellung eines berechneten Temperaturverlaufs in den einzelnen Schichten A-L über der Zeit bei wenig gekühlter Umlenkwalze;
- Figur 7:: eine Darstellung der berechneten Temperatur in den einzelnen Schichten A-L zu bestimmten Zeitpunkten bei wenig gekühlter Umlenkwalze;
- Figur 8:: eine erfindungsgemäße Ausgestaltung der Erfindung mit Heizeinrichtung.

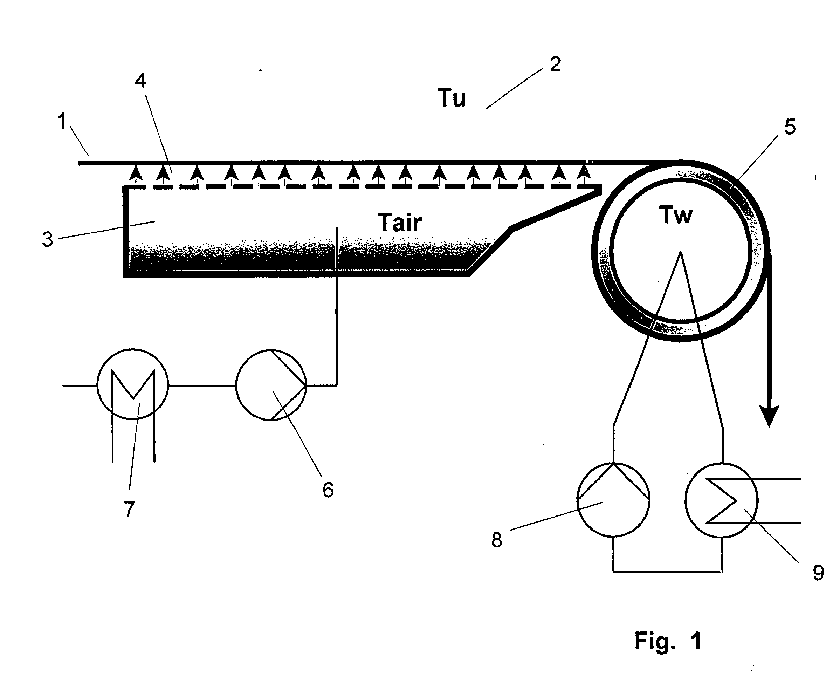

Figuren 1, 2 und 4-7 beziehen sich auf Ausführungsformen, die nicht Teil der Erfindung ist.

Figur 1 zeigt schematisch die Anordnung der Kühleinrichtung 3 in einer Folienverarbeitungsanlage. Die Mehrschicht-Kunststofffolie 1 mit einer an der Unterseite aufgetragenen siegelfähigen Schicht L läuft in Folienlaufrichtung 10 von links in die Kühleinrichtung 3 ein. Die Kühleinrichtung 3 umfasst einen unterhalb der Folie 1 angeordneten Düsenkasten, der eine Vielzahl von auf die Folienunterseite gerichteten Luftdüsen 4 aufweist. Der Düsenkasten sorgt für die Verteilung der von einem Luftkühler 7 gekühlten und von einem Gebläse 6 eingeblasenen Luft. Durch die nach oben gerichteten Düsen 4 wird die Luft mit hoher Geschwindigkeit auf die heiße, die Siegeltemperatur übersteigende Schicht der Folie 1 geblasen. Aufgrund des hohen Wärmeübergangs, verursacht durch eine hohe Luftgeschwindigkeit, einen geringen Düsenabstand zur Folie 1 und einen ausreichend großen Temperaturunterschied, kommt es zum schnellen Abkühlen der siegelfähigen Schicht L der Folie 1. Die schlechte Wärmeleitfähigkeit des Folienpolymers verhindert ein schnelles Nachfließen der Wärme aus den mittleren Folienschichten in die gekühlte Folienschicht L. Am Auslauf der Kühleinrichtung hat die Folie auf der die Umlenkwalze 5 berührenden Seite durch entsprechende Wahl der Lufttemperatur, der Luftgeschwindigkeit sowie der Beblasungszeit eine ausreichend niedrige Temperatur, um mit der Umlenkwalze ohne Probleme in Berührung kommen zu können.

Die Umlenkwalze 5 selbst wird durch eine Wasserkühlung gekühlt. Angetrieben von einer Pumpe 8 zirkuliert das von einem Wasserkühler 9 gekühlte Wasser im Kühlkreislauf der Umlenkwalze 5.

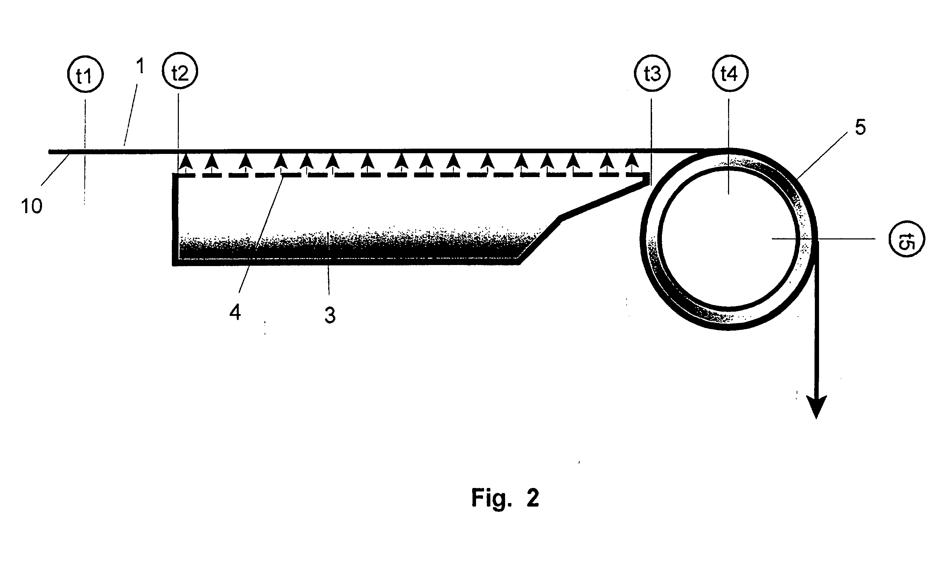

In Figur 2 sind unterschiedliche Stellen bzw. Zeitpunkte t1 bis t5 beim Folientransport gekennzeichnet, auf die in den nachfolgenden Zeichnungen und deren Beschreibung Bezug genommen wird.

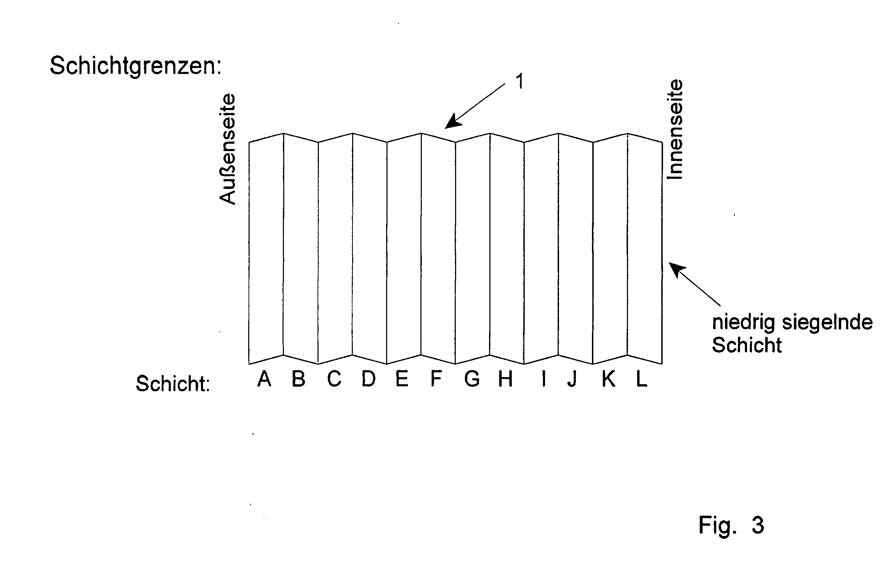

Figur 3 zeigt schematisch einen Querschnitt durch eine Mehrschicht-Kunststofffolie 1, der für die thermische Berechnung der in der Kunststofffolie herrschenden Temperaturen zum Beispiel in zwölf gleich dicke Schichten A - L unterteilt ist. Die Außenseite der Folie 1 wird im Beispiel durch die Schicht A gebildet, während die Innenseite und siegelfähige Schicht beispielsweise die Schicht L ist. Die Schichten A - L sind durch Schichtgrenzen theoretisch voneinander getrennt. So ist beispielsweise eine Schichtgrenze der Übergang von Schicht A zu B.

In den thermischen Berechnungen wurde die Temperatur mit Hilfe des Binder-Schmidt-Differenzenverfahrens zu einem bestimmten Zeitpunkt an den jeweiligen Schichtgrenzen berechnet. Der in den Zeichnungen dargestellte angenäherte Temperaturverlauf ergibt sich durch Verbinden der zu einem Zeitpunkt an den Schichten sich einstellenden Temperaturen.

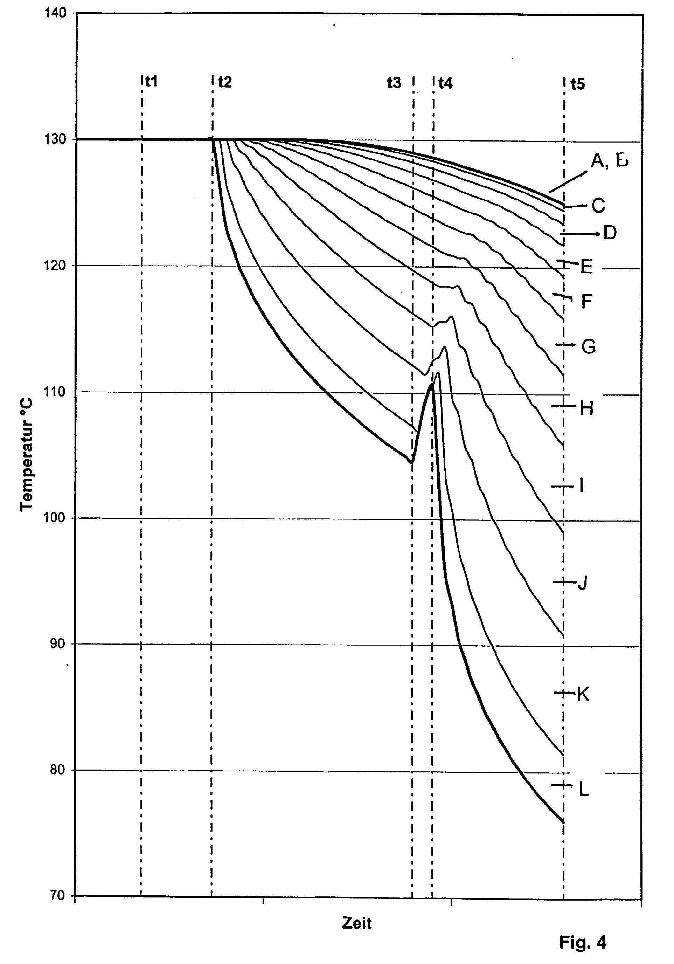

Figur 4 zeigt die berechneten Temperaturverläufe der einzelnen Folienschichten A - L über der Zeit.
Auf der Abszisse sind die einzelnen Zeitschritte der Berechnung aufgetragen, während die Ordinate die Temperatur T zeigt. Es wird insbesondere auf die in Figur 2 gezeigten Zeitpunkte t1 - t 5 Bezug genommen.

Zum Zeitpunkt t1 liegt die Temperatur aller Schichten A - L der Folie 1 konstant bei einer angenommenen Verarbeitungstemperatur von z.B. 130°C. Dies stellt die Situation vor Einlauf in die Kühleinrichtung 3 dar. Die Temperaturverteilung über der Dicke der Folie 1 zeigt keine Unterschiede. Die Folie ist vollständig und einheitlich durchgewärmt.
Zu Zeitpunkt t2 hat die Kühleinrichtung 3 bereits von der Innenseite her die Folie 1 gekühlt. Die Schicht L hat nur noch eine Temperatur von ca. 120° C, während auf der Außenseite bei Schicht A noch die konstante Verarbeitungstemperatur von 130°C herrscht.
Zum Zeitpunkt t3, d.h. beim Verlassen der Kühleinrichtung 3, ist die Folie 1 auf der Innenseite (Schicht L) weiter abgekühlt. An der Außenseite (Schicht A) ist bereits eine geringfügige Temperaturabsenkung zu erkennen.
Zu Zeitpunkt t4, d.h. beim Auflaufen auf eine gekühlte Umlenkwalze 5, ist die Temperatur der Folie 1 insgesamt wieder etwas angestiegen. Dies liegt daran, dass zwischen dem Zeitpunkt t3, d.h. dem Verlassen der Kühleinrichtung 3, und dem Zeitpunkt t4, d.h. dem Auflaufen auf die Umlenkwalze 5, aufgrund der Umgebungsbedingungen 2, im Beispiel 130 °C, der Folie 1 wieder kurzzeitig Wärme zugeführt wird. Zusätzlich wird es aufgrund des Wärmeflusses innerhalb der Folie 1 zu einem Ausgleich vom Wärmeren zum Kälteren kommen. Beim Auflaufen auf die Umlenkwalze 5 ist die Temperatur der siegelnden Schicht L stark herabgesetzt, so dass es nicht zum Verkleben auf der Umlenkwalze 5 kommt.
Zeitpunkt t5 zeigt die Temperatur der Folie 1 beim Verlassen der Umlenkwalze 5. Durch die auf ca. 25°C gekühlte Umlenkwalze 5 ist die Temperatur der Folie 1 insgesamt noch zurückgegangen, insbesondere die Temperatur der mit der Umlenkwalze in Kontakt kommenden siegelnden Schicht L ist stark gesunken.
Die erforderliche Kühlleistung der Kühleinrichtung 3 muss so gewählt werden, dass vom Einlaufen der Folie 1 in die Kühleinrichtung 3 bis zum Auflaufen der Folie 1 auf die Umlenkwalze 5 die Temperatur der Randschicht L so weit reduziert wird, dass deren Siegeltemperatur unterschritten wird. Dies ist mit Hilfe der Luftgeschwindigkeit, der Lufttemperatur, der Länge des Blaskastens sowie des Abstands der Düsen 4 zur Folie 1 möglich.

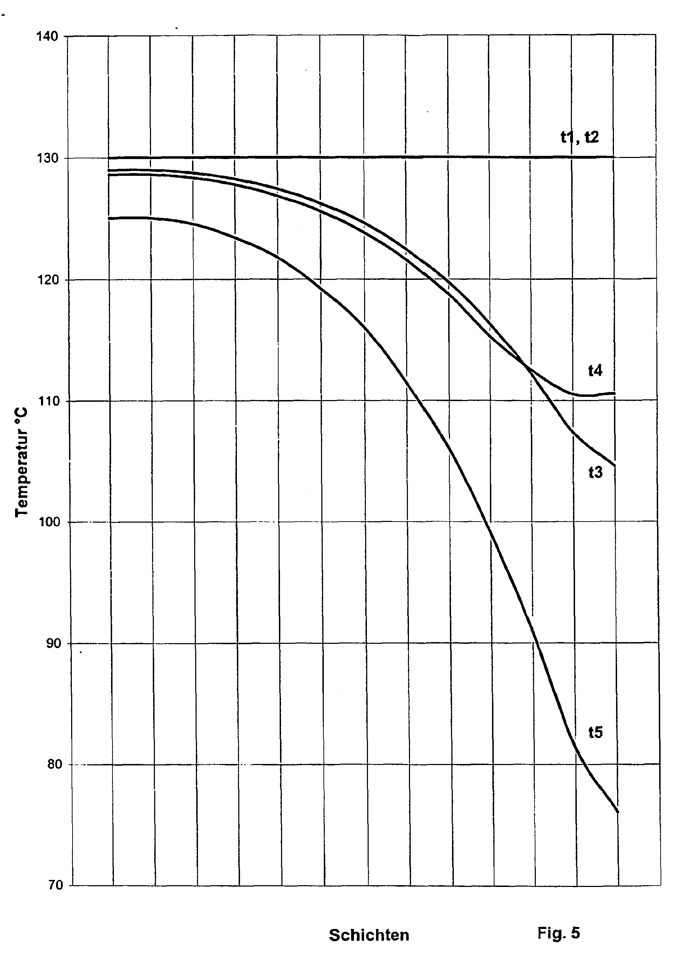

Figur 5 zeigt den berechneten zeitlichen Verlauf der Temperatur der verschiedenen Schichten A - L der Folie 1. Man erkennt auf der Abszisse die einzelnen Schichten A - L. Auf der Ordinate ist wieder die Temperatur T aufgetragen. Das Diagramm stellt damit den Temperaturverlauf innerhalb der Folie zu unterschiedlichen in Figur 2 dargestellten Positionen und Zeitpunkten t1, t3, t4 und t5 dar.
Zum Zeitpunkt t1 ist die Folie vollständig durchgewärmt und hat eine Verarbeitungstemperatur von z. B. 130°C.
Zum Zeitpunkt t3 beim Verlassen der Kühleinrichtung 3 ist die Temperatur auf der gekühlten Seite stark herabgesetzt, während auf der gegenüber liegenden Seite noch nahezu die Ausgangstemperatur vorliegt. Anschließend beim Übergang von der Kühleinrichtung 3 zur Umlenkwalze 5 (Zeitpunkt t4) gleicht sich die Temperatur innerhalb der Folie etwas aus und steigt insbesondere in den inneren Schichten K und L aufgrund der Umgebungstemperatur von 130 °C wieder etwas an. Dann im Zeitpunkt t5, mit dem Kontakt an der gekühlten Umlenkwalze 5, deren Temperatur in diesem Fall rechnerisch mit 25 °C angenommen wurde, fällt die Temperatur der Folie 1 an der inneren Schicht L stark auf unter 80°C ab. An der Außenseite (Schicht A) bleibt die Temperatur bei nahezu 126 °C stehen.

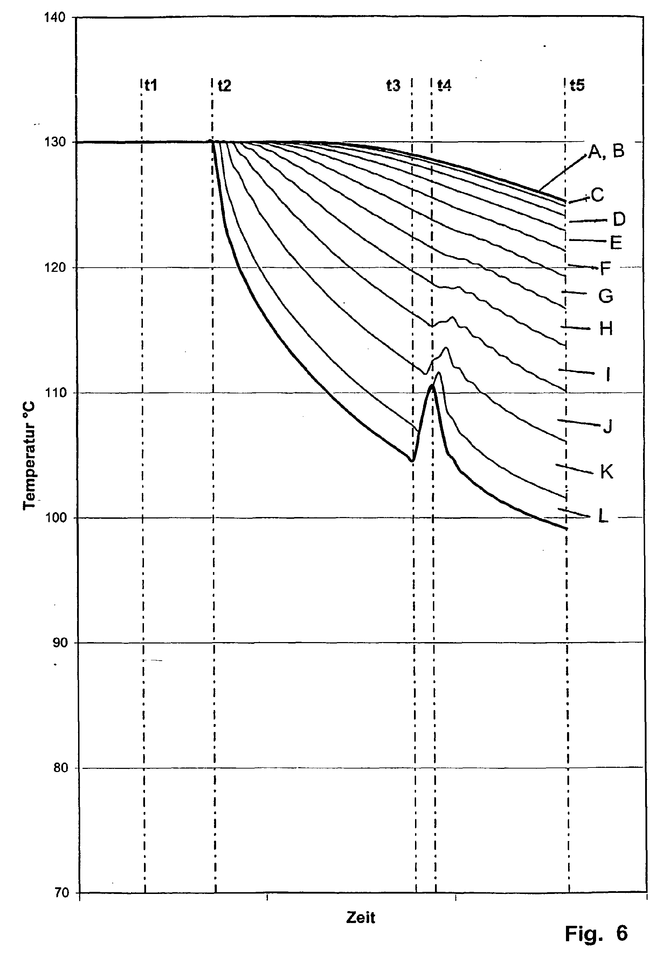

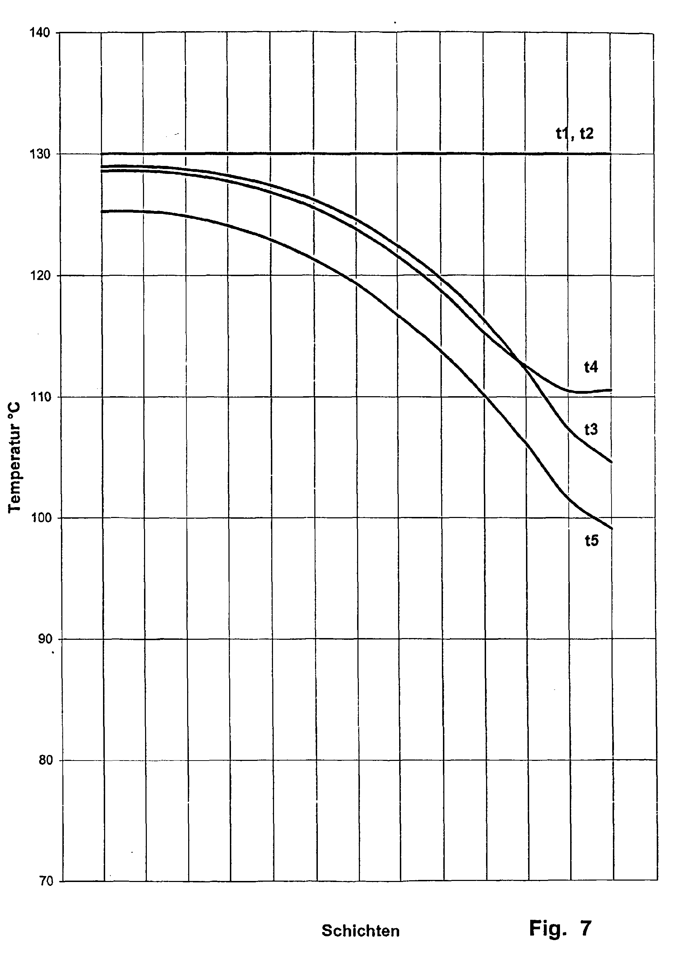

Zur Optimierung des Prozesses ist demnach neben der richtigen Auslegung der Kühleinrichtung 3 auch auf einen möglichst geringen Abstand zwischen der Blaseinrichtung 3 und der Umlenkwalze 5 zu achten. Je kürzer die Strecke umso geringer fällt auch der Temperaturanstieg der Folie 1 in diesem Bereich aus. Darüber hinaus lässt sich erkennen, dass ein zu starkes Kühlen der Umlenkwalze, z.B. auf 25° C, das Temperaturniveau der gesamten Folie stark beeinflusst. Es wurde festgestellt, dass eine Umlenkwalzentemperatur ausreichend ist, die geringfügig, zum Beispiel 5°C, unter der Siegeltemperatur der Schicht L liegt, um ein Verkleben der Folie 1 mit der Umlenkwalze 5 zu vermeiden. Dies ist in den Figuren 6 und 7 dargestellt.

Die Figuren 6 und 7 entsprechen den Figuren 4 und 5, wobei hier lediglich die Umlenkwalzentemperatur auf z. B. 90 °C angehoben wurde. Man erkennt, dass die innere Schicht L der Folie immer noch ausreichend auf eine Temperatur unterhalb der Siegeltemperatur gekühlt wird, während insgesamt die Temperatur innerhalb der Folie gleichmäßiger verläuft.

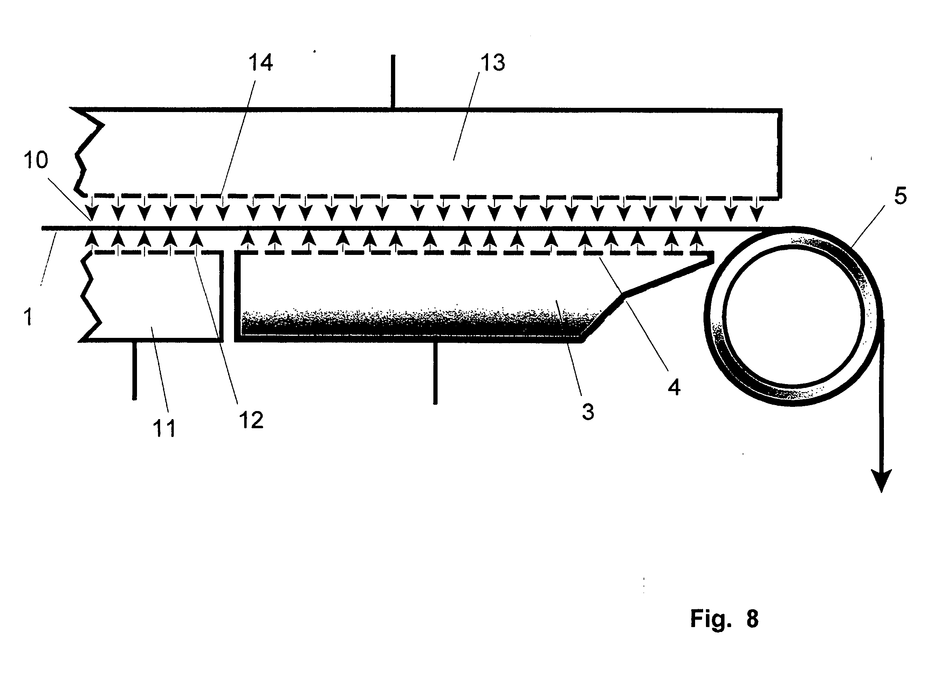

Figur 8 zeigt eine Anführungsform der Erfindung. Hier ist der äußeren Schicht, also der der siegelnden Schicht gegenüber liegenden Schicht der Folie 1, eine Heizeinrichtung 13 mit Blasdüsen 14 zugeordnet, die der Außenseite der Folie 1 Wärme zuführt, während die Innenseite durch die Kühleinrichtung 3 gekühlt wird. Dadurch wird das Absinken der mittleren Temperatur der Folie minimiert, da der Folie stetig von der Außenseite Wärme zugeführt wird. Eine derartige Heizeinrichtung könnte auch um die Umlenkwalze herum angeordnet werden und der Außenseite der Folie 1 Wärme zuführen. Vor der Kühleinrichtung 3 kann ebenfalls eine Heizeinrichtung 11 mit Luftdüsen 12 angeordnet sein, die der Innenseite der Folie 1 Wärme zuführt und diese bis zur Kühleinrichtung 3 auf Verarbeitungstemperatur hält.

### Liste der Bezugszeichen

- 1: Mehrschicht-Kunststofffolie
- 2: Umgebungstemperatur (Tu)
- 3: Kühleinrichtung
- 4: Luftdüsen
- 5: Umlenkwalze
- 6: Gebläse
- 7: Luftkühler
- 8: Pumpe
- 9: Wasserkühler
- 10: Folienlaufrichtung
- 11: Heizeinrichtung
- 12: Lüftdüsen
- 13: Heizeinrichtung
- 14: Luftdüsen

- A - L: Schichten der Kunststofffolie 1
- t1 - t5: Zeitpunkte

## Patentansprüche

1. Verfahren zur Verarbeitung von Mehrschicht-Kunststoff-Flachfolien (1) mit einer oberhalb einer bestimmten Siegeltemperatur liegenden, siegelfähigen Außenschicht (L), wobei die Kunststoff-Flachfolie vor dem Verarbeiten auf eine Verarbeitungstemperatur aufgeheizt wird und wobei die siegelfähige Außenschicht (L) der Kunststoff-Flachfolie mit mindestens einer Umlenkwalze (5) in Berührungskontakt gebracht wird, **dadurch gekennzeichnet, dass** die siegelfähige Außenschicht (L) der Mehrschicht-Kunststoff-Flachfolie (1) vor dem Erreichen der Umlenkwalze auf eine Temperatur unterhalb der Siegeltemperatur abgekühlt wird, während in den übrigen Schichten der Kunststoff-Flachfolie das Niveau der Verarbeitungstemperatur dadurch weitgehend aufrecht erhalten wird, dass gleichzeitig der der siegelfähigen Schicht (L) gegenüberliegenden Schicht (A) Wärme zugeführt wird.

2. Verfahren nach Anspruch 1, **dadurch gekennzeichnet, dass** zur Kühlung der siegelfähigen Schicht (L) gekühlte Luft verwendet wird.

3. Verfahren nach Anspruch 1, **dadurch gekennzeichnet, dass** die Umlenkwalze (5) auf eine Temperatur unterhalb der Siegeltemperatur gekühlt wird.

4. Verfahren nach Anspruch 1, **dadurch gekennzeichnet, dass** die Siegeltemperatur unterhalb der Verarbeitungstemperatur liegt.

5. Vorrichtung zur Verarbeitung von Mehrschicht-Kunststoff-Flachfolien (1) mit einer oberhalb einer bestimmten Siegeltemperatur liegenden, siegelfähigen Schicht (L), wobei die auf eine Verarbeitungstemperatur aufgeheizte Kunststoff-Flachfolie (1) mit mindestens einer Umlenkwalze (5) in Berührungskontakt gebracht wird und wobei in Folientransportrichtung (10) gesehen vor der Umlenkwalze (5) eine Kaltluft abgebende Kühleinrichtung (3) vorgesehen ist, mit deren Hilfe die siegelfähige Schicht (L) vor Erreichen der Umlenkwalze (5) auf eine Temperatur unterhalb der Siegeltemperatur abgekühlt wird, **dadurch gekennzeichnet, dass** der Kühleinrichtung (3) gegenüberliegend eine Heizeinrichtung (13) angeordnet ist.

6. Vorrichtung nach Anspruch 5, **dadurch gekennzeichnet, dass** die Kühleinrichtung (3) eine Anzahl (4) von auf die siegelfähige Schicht (L) gerichteten Luftdüsen umfasst, welche gekühlte Luft auf die Schicht leiten.

## Claims

1. Method for processing multilayer plastics material flat films with a sealable outer layer (L) lying above a specific sealing temperature, the plastics material flat film being heated to a processing temperature before being processed and the sealable outer layer (L) of the plastics material flat film being brought into contact with at least one deflecting roller (5), **characterised in that** before reaching the deflecting roller, the sealable outer layer (L) of the multilayer plastics material flat film (1) is cooled to a temperature below the sealing temperature, while the level of the processing temperature in the other layers of the plastics material flat film is substantially maintained, **in that** heat is simultaneously supplied to the layer (A) opposite the sealable layer (L).

2. Method according to claim 1, **characterised in that** cooled air is used to cool the sealable layer (L).

3. Method according to claim 1, **characterised in that** the deflecting roller (5) is cooled to a temperature below the sealing temperature.

4. Method according to claim 1, **characterised in that** the sealing temperature is below the processing temperature.

5. Apparatus for processing multilayer plastics material flat films (1) with a sealable layer (L) lying above a specific sealing temperature, the plastics material flat film (1) heated to a processing temperature being brought into contact with at least one deflecting roller (5) and, seen in the direction (10) in which the film is conveyed, upstream of the deflecting roller (5), a cooling device (3) providing cold air is provided which cools the sealable layer (L) to a temperature below the sealing temperature before reaching the deflecting roller (5), **characterised in that** a heating device (13) is positioned opposite the cooling device (3).

6. Apparatus according to claim 5, **characterised in that** the cooling device (3) comprises a number (4) of air nozzles which are directed onto the sealable layer (L) and guide cooled air onto the layer.

## Revendications

1. Procédé de traitement de feuilles de plastique plates à plusieurs couches (1) avec une couche externe (L) hermétique placée à une température supérieure à une température déterminée de scellement, dans lequel avant d'être travaillée, la feuille de plastique plate est préchauffée jusqu'à une température de travail, et dans lequel la couche externe hermétique (L) de la feuille de plastique plate est placée en contact avec au moins un cylindre déflecteur (5), **caractérisé en ce que** la couche externe hermétique (L) de la feuille de plastique plate (1) est refroidie avant d'atteindre le cylindre déflecteur à une température inférieure à la température de scellement, tandis que dans les autres couches de la feuille de plastique, le niveau de la température de traitement est maintenu globalement constant, de sorte qu'en même temps de la chaleur est acheminée à la couche (A) située tout contre la couche hermétique (L).

2. Procédé selon la revendication 1 **caractérisé en ce que** l'on utilise de l'air refroidi pour le refroidissement de la couche étanche (L).

3. Procédé selon la revendication 1 **caractérisé en ce que** le cylindre déflecteur (5) est refroidi à une température inférieure à la température de scellement.

4. Procédé selon la revendication 1 **caractérisé en ce que** la température de scellement est inférieure à la température de travail.

5. Dispositif pour le traitement de feuilles de plastique plates à plusieurs couches (1) avec une couche externe (L) hermétique placée à une température supérieure à une température déterminée de scellement, dans lequel la feuille de plastique plate (1) chauffée à une température de travail est placée en contact avec au moins un cylindre déflecteur (5) et dans lequel est prévu dans la direction de transport des feuilles (10) avant le cylindre déflecteur (5) un dispositif de refroidissement (3) produisant de l'air froid, à l'aide duquel la couche hermétique (L) est refroidie avant d'atteindre le cylindre déflecteur (5) à une température inférieure à la température de scellement, **caractérisé en ce que** le dispositif de refroidissement (3) est disposé contre un système de chauffage (13).

6. Dispositif selon la revendication 5 **caractérisé en ce que** le dispositif de refroidissement (3) comprend un certain nombre (4) de buses d'air dirigées sur la couche hermétique (L) qui conduisent de l'air refroidi sur la couche.
